# EUROPEAN PATENT SPECIFICATION

(11) **EP 4 124 686 B1**
(45) Date of publication and mention of the grant of the patent: **08.05.2024**
(21) Application number: 22166375.0
(22) Date of filing: 01.04.2022
(51) Int. Cl.: D06F 39/14, B29C 45/14, B29K 709/08, B29L 12/00, B29L 31/00

(54) **PROCESS FOR THE FABRICATION OF A PORTHOLE FOR WASHING MACHINES, MOULDING SYSTEM FOR IMPLEMENTING SAID PROCESS, AND PORTHOLE OBTAINED BY SAID PROCESS**
VERFAHREN ZUR HERSTELLUNG EINES BULLAUGES FÜR WASCHMASCHINEN, FORMSYSTEM ZUR DURCHFÜHRUNG DES VERFAHRENS UND DURCH DIESES VERFAHREN HERGESTELLTES BULLAUGE
PROCÉDÉ DE FABRICATION D'UN HUBLOT POUR MACHINES À LAVER; SYSTÈME DE MOULAGE POUR LA MISE EN OEUVRE DUDIT PROCÉDÉ ET HUBLOT OBTENU SELON LEDIT PROCÉDÉ

(30) Priority: 01.04.2021 IT 202100008309
(43) Date of publication of application: 01.02.2023
(73) Proprietor: Vetrerie Riunite S.p.A., 37030 Colognola ai Colli (VR) (IT)
(72) Inventor: Vassena, Davide, 37030 Colognola ai Colli (VR) (IT); Cervato, Claudio, 37030 Colognola ai Colli (VR) (IT)
(74) Representative: Fisauli, Beatrice A. M.

(56) References cited:
- EP-A2- 0 845 340
- GB-A- 2 237 293
- KR-A- 20050 093 488
- US-A1- 2003 110 813

## Description

The present invention refers, in general, to a process for the fabrication of a porthole for washing machines, to a moulding system for implementing said process, and to a porthole obtained by said process. In particular, it refers to a process and to the related moulding system which permit to reduce time and costs in order to make a porthole for washing machines.

As is well known, the portholes for washing machines with horizontal loading are formed by a glass portion fixed between a frame and a counter frame, with a possible intermediate ring, coupled together by means of screws.

This process is costly, as it requires several elements, including those made of different materials, and is also time-consuming, as in addition to the two different processes for making the components, they also need to be joined together.

Another problem with the process of making a porthole for washing machines using the known technique is the difficulty, in some cases, of attaching the frame and the counterframe to the glass portion, due to dimensional and/or shape irregularities in the glass portion.

Indeed, such glass portion, due to the nature of the material and of its manufacturing process, does not always have the same shape and dimensions.

**Portholes and the procedures for making them are known from patent documents such as** GB 2 237 293 A**,** US 2003/110813 A1**,** EP 0 845 340 A2 **and** KR 2005 0093488 A**.**

The purpose of the present invention is to provide a process for making a porthole for washing machines which solves the problems of the known technique.

A further scope of the invention is to provide a process for making a porthole for washing machines which is rapid in its construction.

A further scope of the invention is to provide a process for making a porthole for washing machines that is repeatable regardless of the tolerances of the glass portion.

These and other objects are obtained, according to the invention, by a moulding system for the fabrication of a porthole for washing machines comprising a glass portion with a terminal end, and an annular portion made of plastic material in a single body
The moulding system comprises a punch and a die in which a cavity suitable to receive the glass portion is obtained, and in the cavity an annular body supported by elastic bodies for connecting the same annular body with the die is accepted, wherein the end of said annular body is suitable for being pressed against the terminal end of the glass portion, facing the punch.

The presence of the annular body and the elastic bodies by which it is supported makes it possible to manage any differences between each glass portion. In fact, the glass portions cannot be perfectly identical due to the manufacturing process.

In addition, the annular body and the elastic bodies, by means of appropriate adjustments, make it possible to use the same moulding system to make portholes with glass portions of different sizes.

Advantageously, the punch may comprise a protruding edge for engaging the terminal end of the glass portion, facing the end of said annular body. In this way, the injected plastic material embraces the end of the glass portion, ensuring a stable fit.

Besides, in the cavity of the die may be received locking means of the glass portion, so as to keep the same glass portion in position during the mould closing and plastic injection phases.

Said locking means may comprise a suction cup, possibly connected to a suction duct, so that the glass portion can be locked in place when necessary.

The die and the punch, when closed, define in the annular portion a connection part that embraces the end of the glass portion, so as to ensure an optimal fit between the annular and glass portions.

Besides, the die and the punch, when closed, realize in the annular portion, a wavy portion adjacent to the connection portion, useful for managing the different thermal expansion to which the annular portion and the glass portion are subjected.

Advantageously, in the die and/or in the punch coupling means are included suitable for temporarily clamping further elements, a hinge and/or a lock, to be co-moulded together with the annular portion.

The aims and advantages of the invention are also achieved by a porthole for washing machines, comprising a glass portion with an end cap, and an annular portion made of plastic material and in a single body, said annular portion comprising a connection part embracing the end cap of the glass portion.

Besides, the annular portion comprises a corrugated portion adjacent to the connection portion, useful to manage the different thermal expansion of different materials.

The aims and advantages of the invention are also achieved by a process for making an annular portion of plastic material in a single body attached to a glass portion by means of an end of the same glass portion, so as to obtain a porthole for washing machines, said process implemented by means of a punch and a die with a cavity, and comprising the steps of:
- clamping the glass portion to the die by means of clamping means;
- coupling the punch to the die;
- clamp an end edge of the glass portion between the die and the punch, leaving the end free;
- inject thermoplastic material into the cavity obtained between the punch and the matrix so as to make the annular portion of the portlight;
- make a connection part in the annular portion which embraces the end of the glass portion;
- when the thermoplastic material has solidified, separate the punch from the matrix;
- extract from the die the porthole formed by the annular portion and the glass portion.

In the annular portion a wavy portion is made adjacent to the connection portion, to allow elastic deformation of the annular portion and/or the glass portion due to the different thermal expansion coefficients of the various materials, without breakage of the portions themselves.

Besides, prior to coupling the punch to the die, at least one further element, such as a hinge or a lock, to be co-molded together with the annular portion is temporarily blocked, so as to obtain a complete skylight in less time, with greater robustness and precision in centring the elements.

Further features and details of the invention may be better understood from the following description, which is given by way of non-limiting example, as well as from the appended drawing plates in which:
- figure 1 is an axonometric side view of a press on which are mounted a die and a punch suitable to carry out the process for making a porthole for washing machines, according to the invention;
- figure 2 is a front axonometric view of the die of figure 1;
- figure 3 is a cross-sectional side view of the die and the punch coupled to each other in order to realize a porthole for washing machines, by means of the process according to the invention;
- figure 4 is a view of a part identified with A in figure 3;
- figure 5 is a view of a part identified with B in figure 4.

With reference to the enclosed figures, the reference number 10 is used in its entirety to indicate a moulding system for producing a porthole for washing machines formed by a glass portion 20, previously obtained, and an annular portion 30 in plastic material.

In particular, the moulding system 10 allows the annular portion 30 to be made of plastic material in a single body, by means of an injection moulding process.

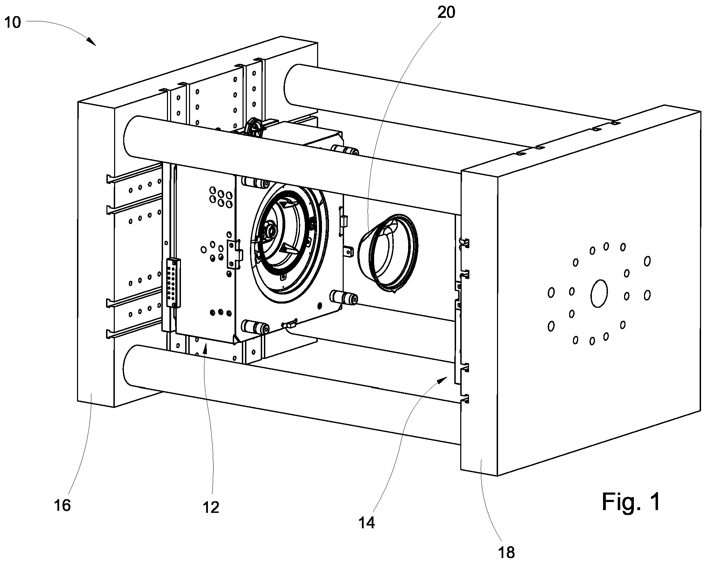

The moulding system 10 comprises a die 12 and a punch 14 mounted respectively on a first portion 16 and a second portion 18 of a press, as shown in figure 1.

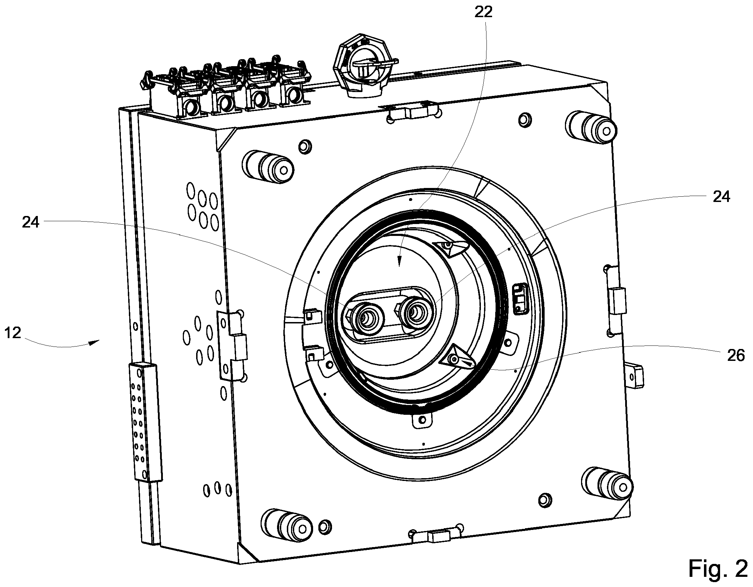

As shown in figure 2, a cavity 22 is formed in the die 12 to accommodate the glass portion 20, which was made in a previous manufacturing process.

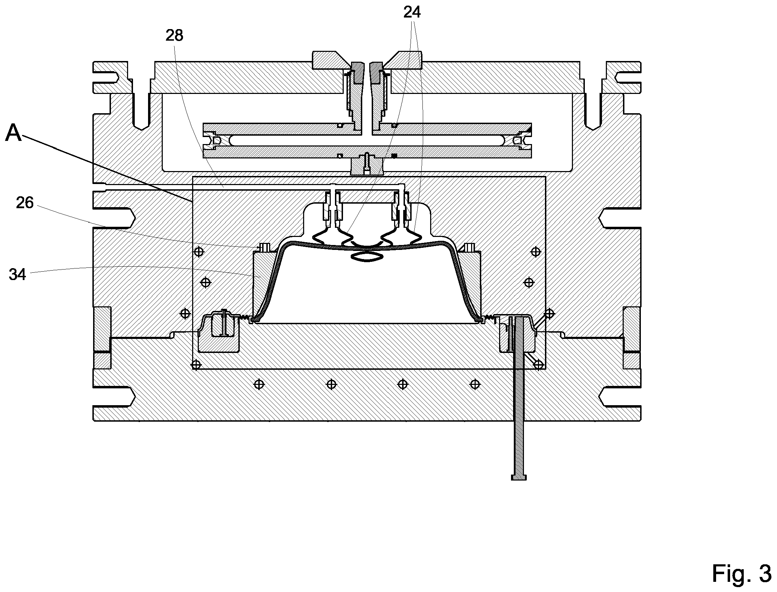

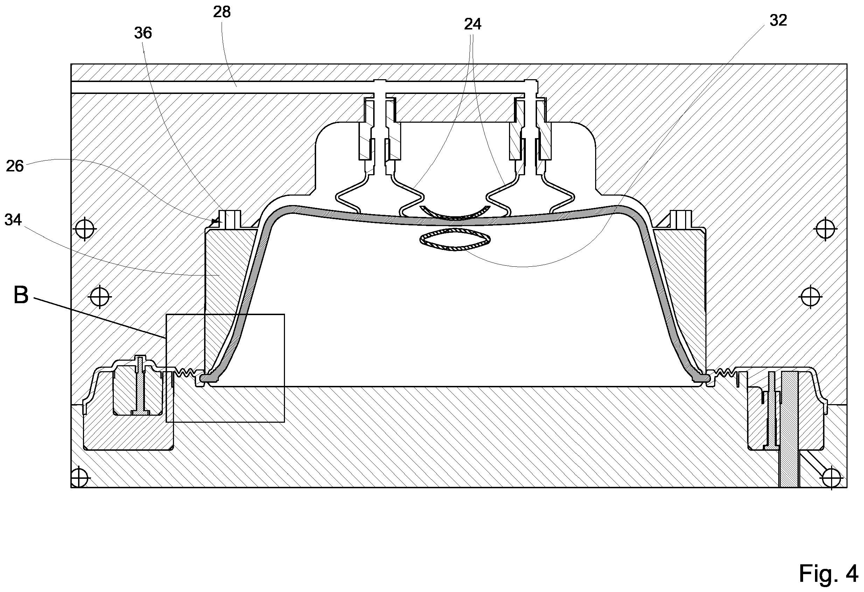

In the cavity 22, suction cups 24 are arranged to block the porthole in a stable position, so as to create a vacuum by means of an air suction duct 28, as visible in figures 3 and 4.

In the cavity 22, a further blocking element 32 is also arranged, which is suitable for cooperating with the suction cups 24 to block the central part of the glass portion 20.

Said blocking element 32 may be another suction cup or a device provided with elastic means.

Furthermore, in the same cavity 22 there is arranged an annular body 34 made of steel supported by elastic bodies 36 accommodated in suitable seats 26.

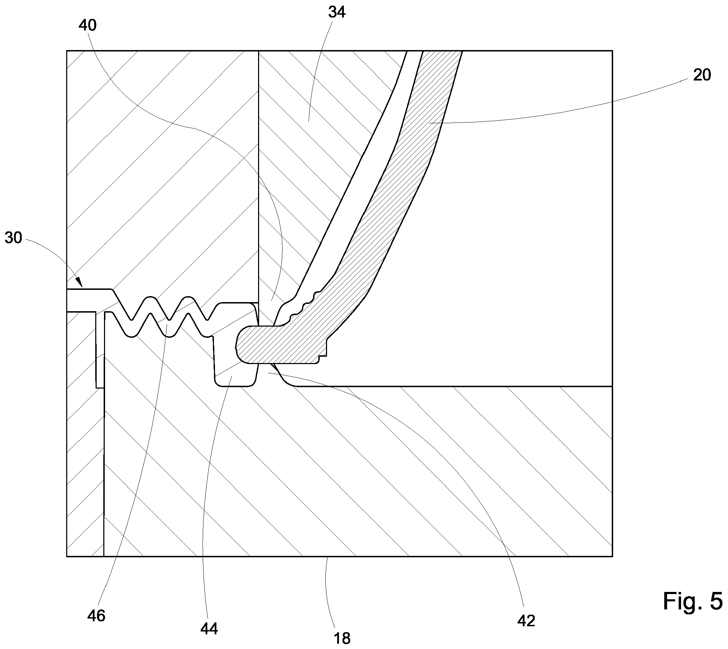

The annular body 34 includes an end 40 suitable for contacting a part of the terminal edge of the glass portion 20 of the porthole, so as to lock it in position, facing a protruding edge 42 from the punch 18, as per figure 5.

In particular, a part of the end edge of the glass portion 20 is blocked, but the last end of the glass portion 20 is left free.

In fact, the connection between the glass portion 20 and the annular portion 30 occurs precisely by means of the last end of the glass portion 20.

As illustrated in figure 5, the die 12 and the punch 14 are shaped in such a way that the connection portion 44 of the annular portion 30 to the glass portion 20 embraces the end of the glass portion 20 itself.

Adjacent to said connection portion 44, the annular portion 30 includes a corrugated portion 46 suitable to compensate for possible elastic deformations following the opening of the die, due to the different thermal expansion coefficients of the materials.

The procedure according to the invention is illustrated below.

As shown in figure 1, the first portion 16 and the second portion 18 of the press are distant from each other so as to separate the die 12 from the punch 14.

The glass portion 20, previously made, is arranged in the cavity 22 of the die 12 and is stably fixed therein by means of the suction cups 24, activated by air suction (vacuum creation) through the air suction duct 28.

A further clamping element 32 cooperates with the suction cups 24 in order to clamp the glass portion 20 in the desired position within the cavity 22.

At this point, the first portion 16 and the second portion 18 of the press are brought closer together so that the punch 14 is abutting on the die 16 and the die is closed.

In this position, as shown in figures 3, 4 and 5, the end of the glass portion 20 of the porthole is blocked by the end 40 of the steel annular body 34 on the one hand and by the protruding edge 42 of the punch 18 on the other hand.

The steel annular body 34, being supported by the spring bodies 36, manages to handle the differences in thickness and thus the tolerances of the end of the glass portion 20.

At the same time, the annular body 34 ensures correct closure between die 12 and punch 14.

The thermoplastic material is then injected into the specially prepared cavity.

The annular portion 30 of the porthole is thus created. In particular, the connection portion 44 of the annular portion 30 to the glass portion 20 embraces the edge of the glass portion 20, guaranteeing an optimal coupling between the two portions, even if made of different material.

In addition, the corrugated portion 46 of the annular portion 30, adjacent to the connection portion 44, allows for possible elastic returns/deformations of the glass portion 20, thus avoiding possible breakage.

Once the annular portion 30 has solidified, the moulding system is opened by separating the punch 14 from the die 12.

Finally, the porthole thus obtained, formed by the annular portion 30 firmly joined to the glass portion 20, is extracted.

It is also possible to co-mould with the annular portion 30 not only the glass portion 20, but also further elements, such as the hinge and the lock.

According to this embodiment of the invention, when the die is open, i.e. the punch is spaced apart from the die, in addition to positioning the glass portion 20 according to what has been illustrated above, the hinge and the lock are also arranged and suitably locked to the die and/or the punch in the predetermined positions.

Once the mould has been closed and the plastic material has been injected, the plastic annular portion 30 also incorporates the hinge and the lock.

This embodiment of the invention provides an important economic advantage due to the fact that the activities of assembling the hinge and lock to the porthole are avoided.

In addition, the porthole is more robust as a whole and the centring of the various elements of which the porthole is composed is more precise.

Furthermore, variants may be provided which are considered within the scope of the invention as defined in the appended claims.

For example, the means for locking the porthole within the die may be different from those previously illustrated, also arranged to lock other parts of the glass portion.

In addition, the various devices enabling locking of the porthole are conformed in such a way that they can be used, irrespective of the conformation and size of the porthole to be obtained.

## Claims

1. Moulding system (10) for the fabrication of a porthole for washing machines comprising a glass portion (20) with a terminal end, and an annular portion (30) made of plastic material in a single body, said moulding system (10) comprising a punch (14) and a die (12) in which a cavity (22) suitable to receive the glass portion (20) is obtained, wherein in the cavity (22) an annular body (34) supported by elastic bodies (36) for connecting the same annular body (34) with the die (12) is accepted, the end (40) of said annular body (34) suitable for being pressed against the terminal end of the glass portion (20), facing the punch (14);
wherein the punch (14) comprises a protruding edge (42) for engaging the terminal end of the glass portion (20), facing the end (40) of said annular body (34);
wherein the die (12) and the punch (14), when closed, define in the annular portion (30) a connection part (44) that embraces the end of the glass portion (20); **characterized by the fact that** the die (12) and the punch (14), when closed, realize in the annular portion (30), a wavy portion (46) adjacent to the connection portion (44).

2. Moulding system (10) according to the preceding claim, wherein in the cavity (22) of the die (12) are received locking means (24, 28, 32) of the glass portion (20).

3. Molding system (10) according to the preceding claim, wherein the locking means comprise a suction cup (24).

4. Moulding system (10) according to the preceding claim, wherein the suction cup (24) is connected to a suction duct (28).

5. Moulding system according to any of the preceding claims, wherein the die and/or the punch include coupling means suitable for temporarily clamping further elements to be co-moulded together with the annular portion.

6. Porthole for washing machines, comprising a glass portion (20) with an end cap, and an annular portion (30) made of plastic material and in a single body, said annular portion (30) comprising a connection part (44) embracing the end cap of the glass portion (20); **characterized by the fact that**
the annular portion (30) comprises a corrugated portion (46) adjacent to the connection portion (44).

7. Process for making an annular portion (30) of plastic material in a single body attached to a glass portion (20) by means of an end of the same glass portion (20), so as to obtain a porthole for washing machines, said process implemented by means of a punch (14) and a die (12) with a cavity (22), and comprising the steps of:
- clamping the glass portion (20) to the die (12) by means of clamping means (24, 28, 32);
- coupling the punch (14) to the die (12);
- clamp an end edge of the glass portion (20) between the die (12) and the punch (14), leaving the end free;
- inject thermoplastic material into the cavity obtained between the punch (14) and the matrix (12) so as to make the annular portion (30) of the portlight;
- make a connection part (44) in the annular portion (30) which embraces the end of the glass portion (20);
- when the thermoplastic material has solidified, separate the punch (14) from the matrix (12);
- extract from the die (12) the porthole formed by the annular portion (30) and the glass portion (20);
**characterized by the fact that** in the annular portion (30) a wavy portion (46) is made adjacent to the connection portion (44).

8. Process according to the preceding claim, wherein, prior to coupling the punch (14) to the die (12), at least one further element to be co-molded together with the annular portion (30) is temporarily blocked.

9. Process according to the preceding claim, wherein the at least one further element is a hinge and/or a lock.

## Patentansprüche

1. Formsystem (10) zur Herstellung eines Bullauges für Waschmaschinen, das einen Glasteil (20) mit einem Abschlussende und einen ringförmigen Teil (30) aus Kunststoff in einem einzigen Körper umfasst, wobei das Formsystem (10) einen Stempel (14) und eine Matrize (12) umfasst, in der ein Hohlraum (22) erhalten wird, der geeignet ist, den Glasteil (20) aufzunehmen, wobei in dem Hohlraum (22) ein ringförmiger Körper (34) aufgenommen wird, der von elastischen Körpern (36) zum Verbinden desselben ringförmigen Körpers (34) mit der Matrize (12) getragen wird, wobei das Ende (40) des ringförmigen Körpers (34) geeignet ist, gegen das dem Stempel (14) zugewandte Ende des Glasabschnitts (20) gedrückt zu werden;
wobei der Stempel (14) eine vorstehende Kante (42) zum Angreifen an dem dem Ende (40) des ringförmigen Körpers (34) zugewandten Ende des Glasabschnitts (20) aufweist;
wobei die Matrize (12) und der Stempel (14), wenn sie geschlossen sind, in dem ringförmigen Abschnitt (30) einen Verbindungsteil (44) definieren, der das Ende des Glasabschnitts (20) umschließt; **dadurch gekennzeichnet, dass** die Matrize (12) und der Stempel (14), wenn sie geschlossen sind, in dem ringförmigen Abschnitt (30) einen wellenförmigen Abschnitt (46) benachbart zu dem Verbindungsteil (44) realisieren.

2. Formsystem (10) nach dem vorhergehenden Anspruch, wobei in dem Hohlraum (22) der Matrize (12) Verriegelungsmittel (24, 28, 32) des Glasteils (20) aufgenommen sind.

3. Formsystem (10) nach dem vorhergehenden Anspruch, wobei die Verriegelungsmittel einen Saugnapf (24) umfassen.

4. Formsystem (10) nach dem vorhergehenden Anspruch, wobei der Saugnapf (24) mit einem Saugkanal (28) verbunden ist.

5. Formsystem nach einem der vorhergehenden Ansprüche, wobei die Matrize und/oder der Stempel Kupplungsmittel aufweisen, die geeignet sind, weitere mit dem ringförmigen Abschnitt mitzuformende Elemente vorübergehend einzuklemmen.

6. Bullauge für Waschmaschinen, das einen Glasabschnitt (20) mit einer Endkappe und einen ringförmigen Abschnitt (30) aus Kunststoffmaterial in einem einzigen Körper umfasst, wobei der ringförmige Abschnitt (30) einen Verbindungsteil (44) umfasst, der die Endkappe des Glasabschnitts (20) umschließt, **dadurch gekennzeichnet, dass**
der ringförmige Teil (30) einen gewellten Teil (46) angrenzend an den Verbindungsteil (44) aufweist.

7. Verfahren zur Herstellung eines ringförmigen Teils (30) aus Kunststoff in einem einzigen Körper, der an einem Glasteil (20) mittels eines Endes desselben Glasteils (20) befestigt ist, um ein Bullauge für Waschmaschinen zu erhalten, wobei das Verfahren mittels eines Stempels (14) und einer Matrize (12) mit einem Hohlraum (22) durchgeführt wird und die folgenden Schritte umfasst:
- Festklemmen des Glasteils (20) an der Matrize (12) mit Hilfe von Klemmmitteln (24, 28, 32);
- Koppeln des Stempels (14) mit der Matrize (12);
- Einklemmen einer Endkante des Glasabschnitts (20) zwischen der Matrize (12) und dem Stempel (14), wobei das Ende frei bleibt;
- Einspritzen von thermoplastischem Material in den zwischen dem Stempel (14) und der Matrize (12) entstandenen Hohlraum, um den ringförmigen Abschnitt (30) des Fensters herzustellen;
- Herstellung eines Verbindungsteils (44) in dem ringförmigen Abschnitt (30), der das Ende des Glasabschnitts (20) umschließt;
- wenn das thermoplastische Material erstarrt ist, den Stempel (14) von der Matrize (12) trennen;
- aus der Matrize (12) das durch den ringförmigen Teil (30) und den Glasteil (20) gebildete Bullauge herausnehmen;
**dadurch gekennzeichnet, dass** in dem ringförmigen Abschnitt (30) ein wellenförmiger Abschnitt (46) angrenzend an den Verbindungsabschnitt (44) hergestellt wird.

8. Verfahren nach dem vorhergehenden Anspruch, wobei vor dem Ankoppeln des Stempels (14) an die Matrize (12) mindestens ein weiteres Element, das zusammen mit dem ringförmigen Abschnitt (30) geformt werden soll, vorübergehend blockiert wird.

9. Verfahren nach dem vorhergehenden Anspruch, wobei das mindestens eine weitere Element ein Scharnier und/oder ein Schloss ist.

## Revendications

1. Système de moulage (10) pour la fabrication d'un hublot pour machines à laver comprenant une partie en verre (20) avec une extrémité terminale, et une partie annulaire (30) en matière plastique dans un seul corps, ledit système de moulage (10) comprenant un poinçon (14) et une matrice (12) dans laquelle on obtient une cavité (22) apte à recevoir la partie en verre (20), dans laquelle est accepté dans la cavité (22) un corps annulaire (34) soutenu par des corps élastiques (36) pour relier le même corps annulaire (34) à la matrice (12), l'extrémité (40) dudit corps annulaire (34) étant apte à être pressée contre l'extrémité terminale de la portion de verre (20), en face du poinçon (14) ;
dans lequel le poinçon (14) comprend un bord en saillie (42) pour engager l'extrémité terminale de la portion de verre (20), en face de l'extrémité (40) dudit corps annulaire (34) ;
dans lequel la matrice (12) et le poinçon (14), lorsqu'ils sont fermés, définissent dans la partie annulaire (30) une partie de connexion (44) qui embrasse l'extrémité de la partie en verre (20) ; **caractérisé par le fait que** la matrice (12) et le poinçon (14), lorsqu'ils sont fermés, réalisent dans la partie annulaire (30), une partie ondulée (46) adjacente à la partie de connexion (44).

2. Système de moulage (10) selon la revendication précédente, dans lequel dans la cavité (22) de la matrice (12) sont reçus des moyens de verrouillage (24, 28, 32) de la partie en verre (20).

3. Système de moulage (10) selon la revendication précédente, dans lequel les moyens de verrouillage comprennent une ventouse (24).

4. Système de moulage (10) selon la revendication précédente, dans lequel la ventouse (24) est reliée à un conduit d'aspiration (28).

5. Système de moulage selon l'une quelconque des revendications précédentes, dans lequel la matrice et/ou le poinçon comprennent des moyens de couplage aptes à serrer temporairement d'autres éléments à co-mouler avec la partie annulaire.

6. Hublot pour machines à laver, comprenant une partie en verre (20) avec un bouchon d'extrémité, et une partie annulaire (30) en matière plastique et dans un seul corps, ladite partie annulaire (30) comprenant une partie de connexion (44) embrassant le bouchon d'extrémité de la partie en verre (20) ; **caractérisé par le fait que**
la partie annulaire (30) comprend une partie ondulée (46) adjacente à la partie de connexion (44).

7. Procédé de fabrication d'une partie annulaire (30) en matière plastique en un seul corps fixée à une partie en verre (20) par l'intermédiaire d'une extrémité de la même partie en verre (20), afin d'obtenir un hublot pour machines à laver, procédé mis en oeuvre au moyen d'un poinçon (14) et d'une matrice (12) avec une cavité (22), et comprenant les étapes de :
- serrer la portion de verre (20) sur la matrice (12) à l'aide de moyens de serrage (24, 28, 32) ;
- coupler le poinçon (14) à la matrice (12) ;
- serrer un bord d'extrémité de la portion de verre (20) entre la matrice (12) et le poinçon (14), en laissant l'extrémité libre ;
- injecter de la matière thermoplastique dans la cavité obtenue entre le poinçon (14) et la matrice (12) de manière à réaliser la partie annulaire (30) du hublot ;
- réaliser dans la partie annulaire (30) une pièce de raccordement (44) qui embrasse l'extrémité de la partie en verre (20) ;
- lorsque le matériau thermoplastique s'est solidifié, séparer le poinçon (14) de la matrice (12) ;
- extraire de la matrice (12) le hublot formé par la partie annulaire (30) et la partie en verre (20) ;
**caractérisé par le fait que** dans la partie annulaire (30) une partie ondulée (46) est réalisée à côté de la partie de connexion (44).

8. Procédé selon la revendication précédente, dans lequel, avant d'accoupler le poinçon (14) à la matrice (12), au moins un autre élément à co-mouler avec la partie annulaire (30) est temporairement bloqué.

9. Procédé selon la revendication précédente, dans lequel l'au moins un autre élément est une charnière et/ou une serrure.
